# EUROPEAN PATENT SPECIFICATION

(11) **EP 3 086 010 B1**
(45) Date of publication and mention of the grant of the patent: **04.10.2017**
(21) Application number: 15382191.3
(22) Date of filing: 20.04.2015
(51) Int. Cl.: F16K 35/04, F16K 11/078, F16K 27/04

(54) **MIXING CARTRIDGE WITH TEMPERATURE LIMITER**
MISCHPATRONE MIT TEMPERATURBEGRENZER
CARTOUCHE DE MÉLANGE AVEC LIMITEUR DE TEMPÉRATURE

(43) Date of publication of application: 26.10.2016
(73) Proprietor: Sedal, S.L., 08740 Sant Andreu De La Barca (ES)
(72) Inventor: Gili Martínez, Sergi, 08035 Barcelona (ES)
(74) Representative: Oficina Ponti, SLP

(56) References cited:
- WO-A1-00/26566
- WO-A1-98/55786
- ES-U- 1 060 827

## Description

### FIELD OF THE INVENTION

The present invention relates to a mixing cartridge for a single-grip mixing faucet with temperature limiter. In particular, the mixing cartridge of the invention comprises a temperature limiter that, while having a very simple structure, is capable of providing a surmountable limitation for the temperature of the outflow of mixed water. Moreover, the mixing cartridge of the invention makes it possible for the user to disable and enable the temperature limitation feature in a simple manner, and allows the temperature limiter be quickly and easily replaced in case of damage.

### BACKGROUND OF THE INVENTION

It is known the use of mixing cartridges in single-grip faucets to mix separate inflows of hot and cold water and, in this manner, regulate the flow-rate and temperature of the mixed water leaving the faucet.

A typical mixing cartridge comprises a cartridge body including a cylindrical neck portion, a top element including a cylindrical portion arranged concentrically inside and rotatably coupled to said cylindrical neck portion, and a base element associated with the cartridge body and comprising openings for the separate inflow of hot and cold water and with an opening for the outflow of mixed water. Inside the cartridge body there are a fixed plate superimposed on the base element, which comprises water flow openings corresponding to those present in the base element, and a movable plate that internally defines a mixing chamber.

The movable plate is coupled to a pivotable actuation lever provided in the cylindrical portion of the top element, so that by pivoting the actuation lever about a fulcrum the movable plate can be linearly displaced on the fixed plate increasing progressively the flow-rate of mixed water. Additionally, rotating the top element about the axis of its cylindrical portion causes a rotation of the movable plate on the fixed plate varying progressively the mixture of hot and cold water, and hence the temperature of the mixed water, for a given outflow rate.

Due to their simplicity of operation, most of the time users do an inefficient use of single-grip mixing faucets. For example, it is typical to leave the handle of the faucet that is connected to the pivotable actuation lever of the mixing cartridge at its middle angular position. In such case, when the user actuates the handle, causing the actuation lever to pivot, equal parts of hot and cold water are poured from the faucet. To make things even worse, regardless of the actual outflow needs, users tend to actuate the handle of the faucet forcing the actuation lever to reach the maximum flow-rate.

Such misuse results in an unnecessary energy and water spending. Furthermore, it can also possibly lead, due to for example inaccuracies in the selection of temperature, to scalding.

In order to overcome this problem, it is known the use of temperature limiters in which the temperature of the mixed water can be limited to a set value.

For example, document ES 1 060 827 U discloses a mixing cartridge with a temperature limiter that comprises a spring-loaded member that includes a resilient element coupled to the cylindrical portion of the top element and limits the rotation range of the top element to an intermediate angular position, determined by the interference with a flange in the internal surface of the neck portion of the cartridge body. In such mixing cartridge, the top element can be rotated beyond said intermediate angular position against the action of the spring-loaded member.

However, this solution has the drawback that, as the spring-loaded member is concealed inside the cartridge body, it is not simple to replace the resilient element if this wears out or becomes damaged. Indeed, it is not possible to replace the resilient element without disassembling the mixing cartridge and afterwards reassembling it, which makes it a complex and time-consuming task.

The same problem would occur should the user want to disable, and later on enable again, the temperature limitation feature of the mixing cartridge. Each time, the mixing cartridge should be disassembled to remove the resilient element from (or to place it back) around the cylindrical portion of the top element and subsequently reassembled.

Document WO 02/093054 describes another example of a mixing cartridge with temperature limiter, in which a surmountable limitation in the rotation range of the top element of the mixing cartridge is obtained by means of a number of permanent magnets arranged on opposing surfaces of the top element and the cartridge body.

Despite possibly being more robust to breakage due to the absence of mechanical interference between protruding elements than the previous solution, this mixing cartridge still has the drawback that the user or installer cannot possibly disable the temperature limitation feature in a simple manner if he or she so desires.

It is therefore an object of the present invention to provide a mixing cartridge with temperature limiter able to implement a surmountable temperature limitation, while having a simple structure.

It is also an object of the present invention to provide a mixing cartridge with temperature limiter in which the temperature limiter can be replaced in a quick and easy manner when damaged.

It is yet another object of the present invention to provide a mixing cartridge with temperature limiter in which the user can easily disable the temperature limitation feature if not desired, and enable it back if needed.

### SUMMARY OF THE INVENTION

The objects of the present invention are solved with the mixing cartridge with temperature limiter of claim 1. Other favorable embodiments of the invention are defined in the dependent claims.

The present invention relates to a mixing cartridge with temperature limiter that comprises:
- a cartridge body including a cylindrical neck portion;
- a top element including a cylindrical portion arranged concentrically inside and rotatably coupled to said cylindrical neck portion, the cylindrical portion of the top element comprising a pivotable actuation lever;
- a base element associated with the cartridge body, the base element comprising openings for the separate inflow of hot and cold water and with an opening for the outflow of mixed water;
- a fixed plate provided within the cartridge body and superimposed on the base element, the fixed plate comprising water flow openings corresponding to those present in the base element;
- a movable plate provided within the cartridge body and that internally defines a mixing chamber, the movable plate being coupled to the pivotable actuation lever, so that rotating the top element about the axis of its cylindrical portion between a first angular position and a second angular position causes a rotation of the movable plate on the fixed plate varying progressively the mixture of hot and cold water, and hence the temperature of the mixed water, for a given outflow rate; and
- a temperature limiter comprising a spring-loaded member that limits the rotation range of the top element to an intermediate angular position between said first angular position and said second angular position, in which the temperature of the mixed water is limited to a set value, while the top element can be rotated beyond said intermediate angular position against the action of the spring-loaded member.

The mixing cartridge is characterized in that the spring-loaded member is provided in said cylindrical neck portion and protrudes from the internal surface of said cylindrical neck portion towards the cylindrical portion of the top element, wherein the spring-loaded member interferes with an abutment of the cylindrical portion of the top element when the top element reaches said intermediate angular position; in that the cylindrical neck portion comprises a cavity having inner and outer openings provided, respectively, on the internal and external surfaces of the cylindrical neck portion; and in that the spring-loaded member comprises:
- a rigid element arranged in the cavity and protruding through the inner and outer openings of said cavity; and
- a resilient element arranged on the external surface of the cylindrical neck portion, the resilient element being mechanically coupled to the rigid element at the outer opening of the cavity.

In accordance with the invention, the resilient element biases the rigid element towards the cylindrical portion of the top element, forcing the rigid element to protrude through the inner opening of the cavity so that it can interfere with the abutment of the cylindrical portion of the top element when the top element reaches said intermediate angular position.

The force exerted by the resilient element on the rigid element, prevents the top element from turning beyond said intermediate angular position, unless sufficient force is applied so as to overcome the force of the resilient element. When that occurs, the resilient element flexes and the rigid element is receded into the cavity, allowing the top element to continue turning towards either the second angular position (in which the outflow of mixed water only comprises hot water) or the first angular position (in which the outflow of mixed water only comprises cold water).

By providing the spring-loaded member of the temperature limiter in the cylindrical neck portion of the cartridge body, the spring-loaded member is easily accessible from the outside of the cartridge body. Therefore, the user can easily disassemble the spring-loaded member by removing the resilient element from the cylindrical neck portion and retrieving the rigid element from said cavity.

In this manner, without having to take apart the pieces that form the mixing cartridge, the user can straightforwardly replace the resilient element, if this breaks down or becomes damaged, or the rigid element, in case that it had worn out and no longer interfered with the abutment of the cylindrical portion of the top element.

Moreover, once the resilient element is removed from the cylindrical neck portion of the cartridge body, the temperature limitation feature is disabled and the mixing cartridge operates as a normal cartridge with unrestricted mixing of hot and cold water. If the user wants to enable the temperature limitation feature again, it is sufficient to place the rigid element back into the cavity of the cylindrical neck portion, and affix the resilient element to said cylindrical neck portion.

Given that such disabling and enabling of the temperature limitation feature can be repeated as many times as required, the user has a great deal of flexibility in deciding how he or she wants to operate the mixing cartridge.

Optionally, the cavity has a beveled configuration, with the cross-section of the cavity decreasing in size as it progresses from the outer opening to the inner opening.

In this manner, the cavity can also act as a retention element for the rigid element. While the resilient element biases the rigid element towards the cylindrical portion of the top element, the frame of the inner opening of the cavity prevents the rigid element from being pushed out of the cavity.

Preferably, the rigid element has a cylindrical shape and it is arranged with its symmetry axis substantially parallel to the axis of the cylindrical portion of the top element.

The rotational symmetry of a cylindrical shape avoids having to insert the rigid element with a particular orientation into the cavity, hence simplifying even further the assembly of the spring-loaded member. Additionally, aligning the axis of symmetry of the cylindrical rigid element with that of the cylindrical portion is advantageous to maximize the region of interference between the rigid element and the abutment of the cylindrical portion of the top element.

Also preferably, the resilient element comprises positioning means adapted to releasably engage corresponding mounting means provided on the cylindrical neck portion, the positioning means defining a mounting position of the resilient element relative to the cylindrical neck portion.

In this manner the resilient element can be consistently mounted with a same orientation on the external surface of the cylindrical neck portion, ensuring that the biasing force imparted to the rigid element does not vary each time the resilient element is mounted.

In some cases, the resilient element is a C-shaped ring disposed on the external surface of the cylindrical neck portion.

Such a shape is particularly advantageous, as it allows the resilient element to be easily coupled to (or removed from) the external surface of the cylindrical neck portion by simply sliding it in from a side and clipping it on the cylindrical neck portion (or sliding it out towards a side).

Preferably, in these cases the positioning means are arranged on a region of the C-shaped ring opposite to the region on which the C-shaped ring is interrupted.

Optionally, the resilient element is made of metal, preferably stainless steel. This provides a good trade-off between resilience and durability.

Preferably, the abutment comprises a flange that protrudes from the surface of the cylindrical portion of the top element and has a larger dimension being oriented along the axis of said cylindrical portion. More preferably, the flange has a prismatic or semi-cylindrical shape.

Such arrangement and geometry of the flange is advantageous to maximize the region of interference with the rigid element of the spring-loaded member.

In some examples of the mixing cartridge of the present invention, the cylindrical neck portion comprises a second cavity having inner and outer openings, the second cavity being provided at a diametrically opposite position from the cavity. Additionally, the spring-loaded member comprises a second rigid element arranged in the second cavity and that protrudes through the inner and outer openings of said second cavity. Moreover, the resilient element is mechanically coupled to the second rigid element at the outer opening of said second cavity.

Preferably, in these examples, the cylindrical portion of the top element comprises a second abutment provided at a diametrically opposite position from the abutment, the second abutment interfering with the second rigid element of the spring-loaded member.

Having two rigid elements located at diametrically opposite positions on the cylindrical neck portion and adapted to interfere with corresponding abutments of the cylindrical portion of the top element advantageously increases the force that needs to be exerted when rotating the top element to overcome the action of the spring-loaded member.

Alternatively, for a given required force to overcome the action of the spring-loaded member, having two rigid elements, and corresponding abutments, allows reducing the tension that each rigid element needs to withstand, alleviating their design requirements.

In certain embodiments, the top element comprises a fulcrum about which the pivotable actuation lever can be pivoted; and wherein the abutment of the cylindrical portion of the top element is located at an angle of approximately 45 degrees with respect to the fulcrum on the plane of rotation of the top element.

In this manner, the interference of the abutment with the spring-loaded element advantageously occurs for an angular position that is half way between the angular position at which the outflow of mixed water has equal parts of hot and cold water, and the angular position at which the outflow of mixed water contains hot water only.

Alternatively, the abutment of the cylindrical portion of the top element may be located at an angle of approximately 90 degrees with respect to the fulcrum on the plane of rotation of the top element.

In this way, the interference of the abutment with the spring-loaded element occurs for the angular position at which the outflow of mixed water has equal parts of hot and cold water, avoiding unnecessary spending of hot water.

In the context of the present invention the terms substantially and approximately preferably indicate a tolerance of +/-10% or even +/-20% with respect to the nominal value.

### BRIEF DESCRIPTION OF THE FIGURES

In the following some preferred embodiments of the invention will be described with reference to the enclosed figures. They are provided only for illustration purposes without however limiting the scope of the invention.
Figure 1 shows a perspective exploded view of a mixing cartridge with temperature limiter according to an embodiment of the present invention.
Figure 2 is lateral exploded view of the embodiment of figure 1.
Figure 3 depicts a side view of the embodiment of figure 1 in which the mixing cartridge is assembled.
Figure 4 shows a top plan view of the assembled mixing cartridge of the embodiment of figure 1.
Figure 5 corresponds to a cross-sectional view of the mixing cartridge along a plane V-V' shown in figure 3, which is perpendicular to the axis of the cylindrical portion of the top element.
Figure 6 is a cross-sectional view of the mixing cartridge along a plane VI-VI' shown in figure 4, which divides the mixing cartridge into two essentially symmetrical halves.

### DESCRIPTION OF THE PREFERRED EMBODIMENTS

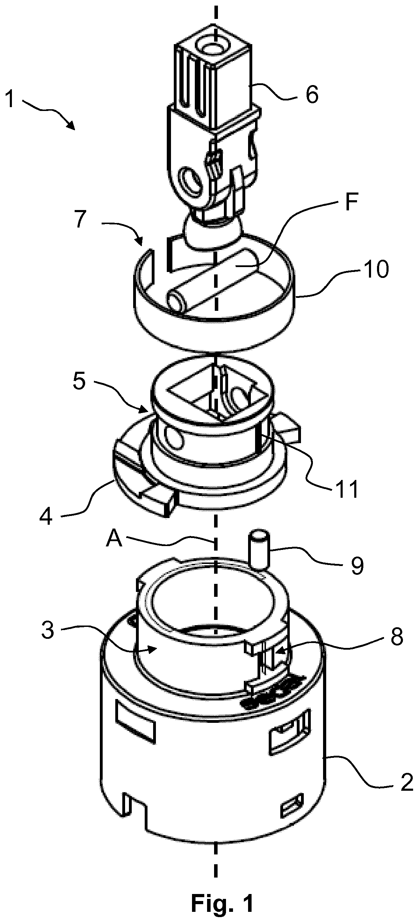

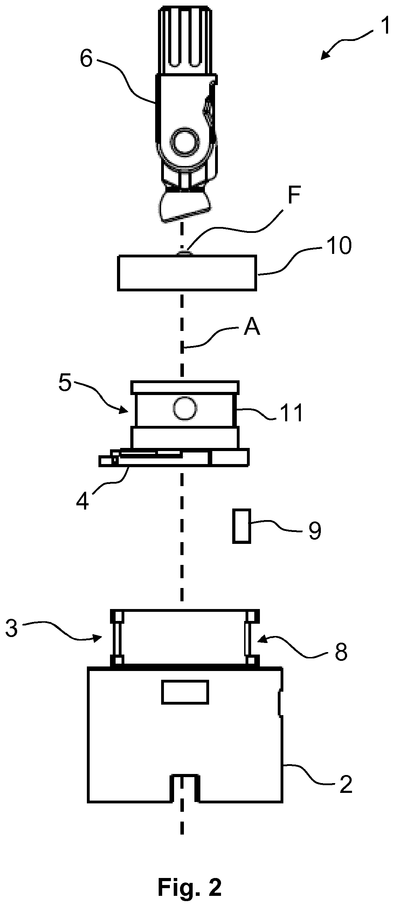

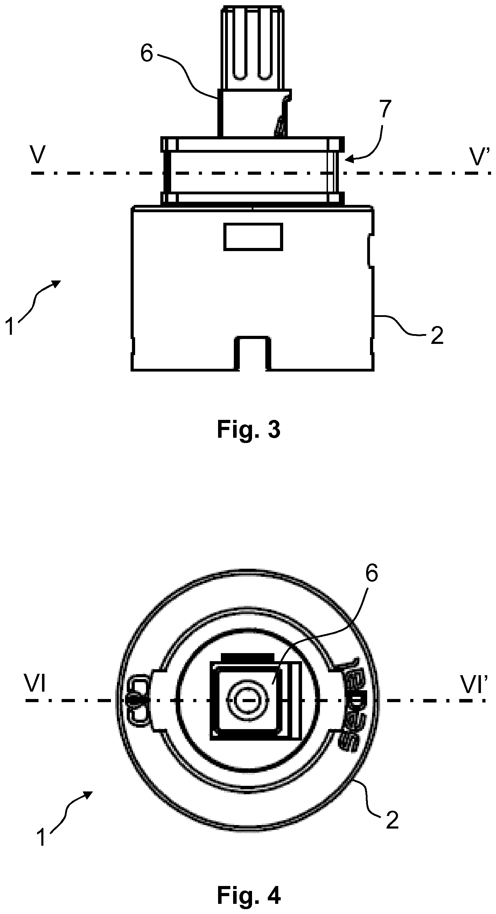

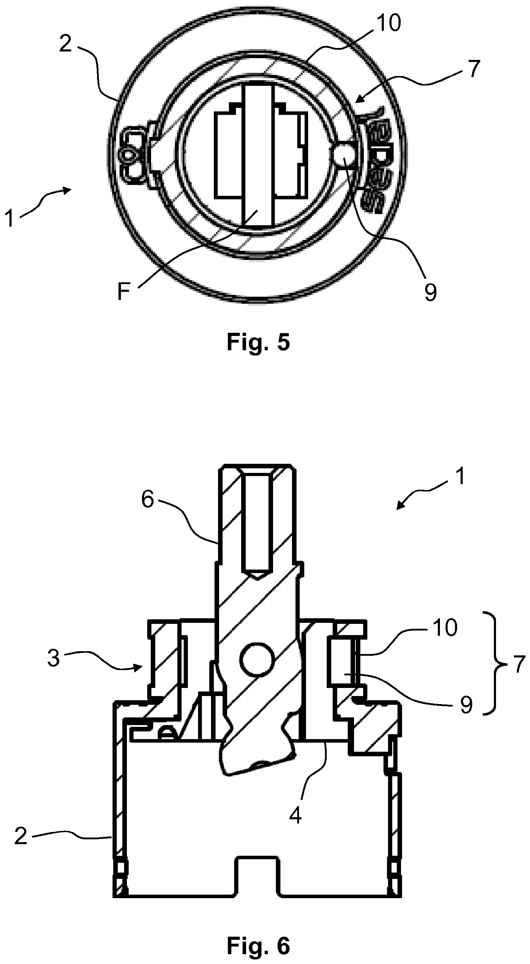

In figures 1 to 6 it is illustrated an embodiment of the mixing cartridge with temperature limiter according to the present invention.

In particular, a mixing cartridge 1 comprises a cartridge body 2 that includes a cylindrical neck portion 3 and a top element 4 including a cylindrical portion 5 arranged concentrically inside, and rotatably coupled to, said cylindrical neck portion 3. The cylindrical portion 5 of the top element comprises a pivotable actuation lever 6 that can be pivoted about a fulcrum F provided in the top element 4. Additionally, the cylindrical neck portion 3 also comprises a cavity that has inner and outer openings provided, respectively, on the internal and external surfaces of the cylindrical neck portion 3 and a beveled configuration, with the cross-section of the cavity 8 decreasing in size as it progresses from the outer opening to the inner opening.

Although not shown in the figures, the mixing cartridge 1 also comprises a base element associated with the cartridge body 2, and that includes openings for the separate inflow of hot and cold water and with an opening for the outflow of mixed water.

Within the cartridge body 2, there is provided a fixed plate (not represented in the figures) superimposed on the base element and that comprises water flow openings corresponding to those present in the base element, and a movable plate (not represented in the figures) that internally defines a mixing chamber. The movable plate is coupled to the pivotable actuation lever 6, so that rotating the top element 4 about the axis A of its cylindrical portion 5 between a first angular position and a second angular position causes a rotation of the movable plate on the fixed plate varying progressively the mixture of hot and cold water for a given outflow rate.

The mixing cartridge 1 further includes a temperature limiter, comprising a spring-loaded member 7, that limits the rotation range of the top element 4 to an intermediate angular position between said first angular position and said second angular position, in which the temperature of the mixed water is limited to a set value, while the top element 4 can be rotated beyond said intermediate angular position against the action of the spring-loaded member 7.

The spring-loaded member 7 is provided in the cylindrical neck portion 3 and protrudes from the internal surface of said cylindrical neck portion 3 towards the cylindrical portion 5 of the top element.

The spring-loaded member 7 comprises a rigid element 9 arranged in the cavity 8. The rigid element 9 protrudes through the inner and outer openings of the cavity 8. As it can be seen in figure 1, the rigid element 9 has a cylindrical shape and is arranged in the cavity 8 with its symmetry axis substantially parallel to the axis A of the cylindrical portion 5 of the top element.

The spring-loaded member 7 further comprises a resilient element 10 arranged on the external surface of the cylindrical neck portion 3 and that is mechanically coupled to the rigid element 9 at the outer opening of the cavities 8. This coupling biases the rigid element 9 towards the cylindrical portion 5 of the top element.

In the embodiment illustrated in the figures, the resilient element 10 is a C-shaped ring made of metal, in particular stainless steel.

The cylindrical portion of the top element comprises an abutment 11 that interferes with the rigid element 9 when the top element 4 reaches said intermediate angular position. Such mechanical interference prevents the top element 4 from turning beyond said intermediate angular position, unless sufficient force is applied so as to overcome the force of the resilient element 10.

The abutment 11 comprises a flange with a prismatic shape that protrudes from the surface of the cylindrical portion 5 of the top element and has a larger dimension being oriented along the axis A of said cylindrical portion.

Finally, it can be observed in figure 1 that the abutment 11 of the cylindrical portion 5 of the top element is located at an angle of approximately 90 degrees with respect to the fulcrum F on the plane of rotation of the top element 4, however in other embodiments the abutment 11 could alternatively be located an angle of approximately 45 degrees.

While the invention has been described with respect to some specific examples, including presently preferred modes of carrying out the invention, those skilled in the art will appreciate that there are numerous variations and permutations of the above described mixing cartridge, including substitution of specific elements by others technically equivalent, without departing from the scope of the invention as set forth in the appended claims.

## Claims

1. Mixing cartridge (1) with temperature limiter, comprising:
- a cartridge body (2) including a cylindrical neck portion (3);
- a top element (4) including a cylindrical portion (5) arranged concentrically inside and rotatably coupled to said cylindrical neck portion (3), the cylindrical portion of the top element comprising a pivotable actuation lever (6);
- a base element associated with the cartridge body (2), the base element comprising openings for the separate inflow of hot and cold water and with an opening for the outflow of mixed water;
- a fixed plate provided within the cartridge body (2) and superimposed on the base element, the fixed plate comprising water flow openings corresponding to those present in the base element;
- a movable plate provided within the cartridge body (2) and that internally defines a mixing chamber, the movable plate being coupled to the pivotable actuation lever (6), so that rotating the top element (4) about the axis (A) of its cylindrical portion (5) between a first angular position and a second angular position causes a rotation of the movable plate on the fixed plate varying progressively the mixture of hot and cold water, and hence the temperature of the mixed water, for a given outflow rate; and
- a temperature limiter comprising a spring-loaded member (7) that limits the rotation range of the top element (4) to an intermediate angular position between said first angular position and said second angular position, in which the temperature of the mixed water is limited to a set value, while the top element (4) can be rotated beyond said intermediate angular position against the action of the spring-loaded member (7);
**characterized in that** the spring-loaded member (7) is provided in said cylindrical neck portion (3) and protrudes from the internal surface of said cylindrical neck portion (3) towards the cylindrical portion (5) of the top element, wherein the spring-loaded member (7) interferes with an abutment (11) of the cylindrical portion (5) of the top element when the top element (4) reaches said intermediate angular position; **in that** the cylindrical neck portion (3) comprises a cavity (8) having inner and outer openings provided, respectively, on the internal and external surfaces of the cylindrical neck portion (3); and **in that** the spring-loaded member (7) comprises:
- a rigid element (9) arranged in the cavity (8) and protruding through the inner and outer openings of said cavity; and
- a resilient element (10) arranged on the external surface of the cylindrical neck portion (3), the resilient element being mechanically coupled to the rigid element at the outer opening of the cavity.

2. The mixing cartridge according to claim 1, wherein the cavity (8) has a beveled configuration, with the cross-section of the cavity decreasing in size as it progresses from the outer opening to the inner opening.

3. The mixing cartridge according to claim 1 or 2, wherein the rigid element (9) has a cylindrical shape and it is arranged with its symmetry axis substantially parallel to the axis (A) of the cylindrical portion of the top element.

4. The mixing cartridge according to any of claims 1 to 3, wherein the resilient element (10) comprises positioning means adapted to releasably engage corresponding mounting means provided on the cylindrical neck portion (3), the positioning means defining a mounting position of the resilient element relative to the cylindrical neck portion.

5. The mixing cartridge according to any of claims 1 to 4, wherein the resilient element (10) is a C-shaped ring disposed on the external surface of the cylindrical neck portion (3).

6. The mixing cartridge according to any of claims 1 to 5, wherein the resilient element (10) is made of metal.

7. The mixing cartridge according to any of claims 1 to 6, wherein the abutment (11) comprises a flange that protrudes from the surface of the cylindrical portion (5) of the top element and has a larger dimension being oriented along the axis (A) of said cylindrical portion.

8. The mixing cartridge according to claim 7, wherein the flange has a prismatic or semi-cylindrical shape.

9. The mixing cartridge according to any of claims 1 to 8, wherein the cylindrical neck portion comprises a second cavity having inner and outer openings, the second cavity being provided at a diametrically opposite position from the cavity; wherein the spring-loaded member comprises a second rigid element arranged in the second cavity and that protrudes through the inner and outer openings of said second cavity; and wherein the resilient element is mechanically coupled to the second rigid element at the outer opening of said second cavity.

10. The mixing cartridge according to claim 9, wherein the cylindrical portion of the top element comprises a second abutment provided at a diametrically opposite position from the abutment, the second abutment interfering with the second rigid element of the spring-loaded member.

11. The mixing cartridge according to any of claims 1 to 10, wherein the top element (4) comprises a fulcrum (F) about which the pivotable actuation lever (6) can be pivoted; and wherein the abutment (11) of the cylindrical portion of the top element is located at an angle of approximately 45 degrees or approximately 90 degrees with respect to the fulcrum (F) on the plane of rotation of the top element (4).

## Patentansprüche

1. Mischkassette (1) mit einem Temperaturbegrenzer, die folgende Merkmale aufweist:
- einen Kassettenkörper (2), der einen zylindrischen Halsabschnitt (3) umfasst;
- ein oberes Element (4), das einen zylindrischen Abschnitt (5) umfasst, der konzentrisch innerhalb des zylindrischen Halsabschnitts (3) angeordnet und drehbar mit demselben gekoppelt ist, wobei der zylindrische Abschnitt des oberen Elements einen schwenkbaren Betätigungshebel (6) aufweist;
- ein Basiselement, das dem Kassettenkörper (2) zugeordnet ist, wobei das Basiselement Öffnungen für den separaten Zufluss von Heiß- und Kaltwasser und eine Öffnung für den Abfluss von Mischwasser aufweist;
- eine feste Platte, die innerhalb des Kassettenkörpers (2) vorgesehen ist und dem Basiselement überlagert ist, wobei die feste Platte Wasserdurchflussöffnungen aufweist, die denjenigen entsprechen, die in dem Basiselement vorhanden sind;
- eine bewegbare Platte, die innerhalb des Kassettenkörpers (2) vorgesehen ist und die innen eine Mischkammer definiert, wobei die bewegbare Platte mit dem schwenkbaren Betätigungshebel (6) gekoppelt ist, so dass ein Drehen des oberen Elements (4) um die Achse (A) des zylindrischen Abschnitts (5) desselben zwischen einer ersten Winkelposition und einer zweiten Winkelposition eine Drehung der bewegbaren Platte auf der festen Platte bewirkt, wobei die Mischung von Heiß- und Kaltwasser und damit die Temperatur des Mischwassers bei einer vorgegebenen Abflussrate fortschreitend variiert; und
- einen Temperaturbegrenzer, der ein federbelastetes Bauglied (7) aufweist, das den Drehbereich des oberen Elements (4) auf eine Zwischenwinkelposition zwischen der ersten Winkelposition und der zweiten Winkelposition begrenzt, bei der die Temperatur des Mischwassers auf einen festgelegten Wert begrenzt ist, während das obere Element (4) entgegen der Wirkung des federbelasteten Bauglieds (7) über die Zwischenwinkelposition hinaus gedreht werden kann;
**dadurch gekennzeichnet, dass** das federbelastete Bauglied (7) in dem zylindrischen Halsabschnitt (3) vorgesehen ist und von der Innenoberfläche des zylindrischen Halsabschnitts (3) zu dem zylindrischen Abschnitt (5) des oberen Elements hin vorsteht, wobei das federbelastete Bauglied (7) einen Anschlag (11) des zylindrischen Abschnitts (5) des oberen Elements störend beeinflusst, wenn das obere Element (4) die Zwischenwinkelposition erreicht; dass der zylindrische Halsabschnitt (3) einen Hohlraum (8) mit einer inneren und einer äußeren Öffnung aufweist, die an der Innenoberfläche beziehungsweise der Außenoberfläche des zylindrischen Halsabschnitts (3) vorgesehen ist; und dass das federbelastete Bauglied (7) folgende Merkmale aufweist:
- ein starres Element (9), das in dem Hohlraum (8) angeordnet ist und durch die innere und die äußere Öffnung des Hohlraums vorsteht; und
- ein elastisches Bauglied (10), das an der Außenoberfläche des zylindrischen Halsabschnitts (3) angeordnet ist, wobei das elastische Bauglied mit dem starren Element an der äußeren Öffnung des Hohlraums mechanisch gekoppelt ist;

2. Die Mischkassette gemäß Anspruch 1, bei der der Hohlraum (8) eine schräge Konfiguration aufweist, wobei der Querschnitt des Hohlraums größenmäßig abnimmt, während derselbe von der äußeren Öffnung zu der inneren Öffnung fortschreitet.

3. Die Mischkassette gemäß Anspruch 1 oder 2, bei der das starre Element (9) eine zylindrische Form aufweist und mit seiner Symmetrieachse im Wesentlichen parallel zu der Achse (A) des zylindrischen Abschnitts des oberen Elements angeordnet ist.

4. Die Mischkassette gemäß einem der Ansprüche 1 bis 3, bei der das elastische Element (10) eine Positioniereinrichtung aufweist, die angepasst ist, eine entsprechende Befestigungseinrichtung, die an dem zylindrischen Halsabschnitt (3) vorgesehen ist, lösbar in Eingriff zu nehmen, wobei die Positioniereinrichtung eine Befestigungsposition des starren Bauglieds relativ zu dem zylindrischen Halsabschnitt definiert.

5. Die Mischkassette gemäß einem der Ansprüche 1 bis 4, bei der das elastische Bauglied (10) ein C-förmiger Ring ist, der an der Außenoberfläche des zylindrischen Halsabschnitts (3) angeordnet ist.

6. Die Mischkassette gemäß einem der Ansprüche 1 bis 5, bei der das elastische Element (10) aus Metall hergestellt ist.

7. Die Mischkassette gemäß einem der Ansprüche 1 bis 6, bei der der Anschlag (11) einen Flansch aufweist, der von der Oberfläche des zylindrischen Abschnitts (5) des oberen Elements vorsteht und eine größere Abmessung aufweist, die entlang der Achse (A) des zylindrischen Abschnitts ausgerichtet ist.

8. Die Mischkassette gemäß Anspruch 7, bei der der Flansch eine prismatische oder halbzylindrische Form aufweist.

9. Die Mischkassette gemäß einem der Ansprüche 1 bis 8, bei der der zylindrische Halsabschnitt einen zweiten Hohlraum mit einer inneren und einer äußeren Öffnung aufweist, wobei der zweite Hohlraum an einer diametral entgegengesetzten Position von dem Hohlraum vorgesehen ist; wobei das federbelastete Bauglied ein zweites starres Element aufweist, das in dem zweiten Hohlraum angeordnet ist und durch die innere und die äußere Öffnung des zweiten Hohlraums vorsteht; und wobei das elastische Bauglied mit dem zweiten starren Element an der äußeren Öffnung des zweiten Hohlraums mechanisch gekoppelt ist.

10. Die Mischkassette gemäß Anspruch 9, bei der der zylindrische Abschnitt des oberen Elements einen zweiten Anschlag aufweist, der an einer diametral entgegengesetzten Position von dem Anschlag vorgesehen ist, wobei der zweite Anschlag mit dem zweiten starren Element des federbelasteten Bauglieds in Eingriff steht.

11. Die Mischkassette gemäß einem der Ansprüche 1 bis 10, bei der das obere Element (4) einen Gelenkpunkt (F) aufweist, um den der schwenkbare Betätigungshebel (6) geschwenkt werden kann; und bei der der Anschlag (11) des zylindrischen Abschnitts des oberen Elements sich auf der Drehebene des oberen Elements (4) in einem Winkel von ungefähr 45 Grad oder ungefähr 90 Grad bezüglich des Drehpunkts (F) befindet.

## Revendications

1. Cartouche de mélange (1) avec limiteur de température, comprenant :
- un corps de cartouche (2) comprenant une portion en goulot cylindrique (3) ;
- un élément supérieur (4) comprenant une portion cylindrique (5) disposée de manière concentrique à l'intérieur et couplée de manière rotative à ladite portion en goulot cylindrique (3), la portion cylindrique de l'élément supérieur comprenant un levier d'activation pivotant (6) ;
- un élément de base associé au corps de la cartouche (2), l'élément de base comprenant des ouvertures pour une arrivée séparée d'eau chaude et d'eau froide ainsi qu'une ouverture pour la sortie d'eau mélangée ;
- une plaque fixe placée dans le corps de la cartouche (2) et superposée à l'élément de base, la plaque fixe comprenant des ouvertures pour le débit d'eau correspondant à celles présentes dans l'élément de base ;
- une plaque mobile placée dans le corps de la cartouche (2) et qui définit en interne une chambre de mélange, la plaque mobile étant couplée au levier d'activation pivotant (6), afin que la rotation de l'élément supérieur (4) autour de l'axe (A) de sa portion cylindrique (5) entre une première position angulaire et une seconde position angulaire provoque une rotation de la plaque mobile sur la plaque fixe variant progressivement le mélange d'eau chaude et froide, et donc la température de l'eau mélangée, pour un débit de sortie donné ; et
- un limiteur de température comprenant un organe à ressorts (7) qui limite l'amplitude de rotation de l'élément supérieur (4) à une position angulaire intermédiaire entre ladite première position angulaire et ladite seconde position angulaire, dans laquelle la température de l'eau mélangée est limitée à une valeur prédéterminée, tandis que l'élément supérieur (4) peut être tourné au-delà de ladite position angulaire intermédiaire contre l'action de l'organe à ressorts (7) ;
**caractérisé en ce que** l'organe à ressorts (7) est fourni dans ladite portion en goulot cylindrique (3) et dépasse de la surface interne de ladite portion en goulot cylindrique (3) vers la portion cylindrique (5) de l'élément supérieur, dans lequel l'organe à ressorts (7) interfère avec une butée (11) de la portion cylindrique (5) de l'élément supérieur pendant que l'élément supérieur (4) atteint ladite position angulaire intermédiaire ; **en ce que** la portion en goulot cylindrique (3) comprend une cavité (8) comportant des ouvertures interne et externe situées, respectivement, sur les surfaces interne et externe de la portion en goulot cylindrique (3) ; et **en ce que** l'organe à ressorts (7) comprend :
- un élément rigide (9) disposé dans la cavité (8) et dépassant à travers les ouvertures interne et externe de ladite cavité ; et
- un élément résilient (10) disposé sur la surface externe de la portion en goulot cylindrique (3), l'élément résilient étant mécaniquement couplé à l'élément rigide situé sur l'ouverture externe de la cavité.

2. Cartouche de mélange selon la revendication 1, dans laquelle la cavité (8) comporte une configuration en biseau, la dimension du diamètre de la cavité diminuant à mesure qu'elle progresse de l'ouverture externe vers l'ouverture interne.

3. Cartouche de mélange selon la revendication 1 ou 2, dans laquelle l'élément rigide (9) a une forme cylindrique et est disposé de sorte que son axe de symétrie soit substantiellement parallèle à l'axe (A) de la portion cylindrique de l'élément supérieur.

4. Cartouche de mélange selon une quelconque des revendications 1 à 3, dans laquelle l'élément résilient (10) comprend des moyens de positionnement adaptés pour engager en les libérant les moyens de montage correspondant fournis sur la portion en goulot cylindrique (3), les moyens de positionnement définissant une position de montage de l'élément résilient par rapport à la portion en goulot cylindrique.

5. Cartouche de mélange selon une quelconque des revendications 1 à 4, dans laquelle l'élément résilient (10) est un anneau en forme de C disposé sur la surface externe de la portion en goulot cylindrique (3).

6. Cartouche de mélange selon une quelconque des revendications 1 à 5, dans laquelle l'élément résilient (10) est en métal.

7. Cartouche de mélange selon une quelconque des revendications 1 à 6, dans laquelle la butée (11) comprend une bride qui dépasse de la surface de la portion cylindrique (5) de l'élément supérieur et a une dimension plus grande orientée le long de l'axe (A) de ladite portion cylindrique.

8. Cartouche de mélange selon la revendication 7, dans laquelle la bride a une forme prismatique ou semi-cylindrique.

9. Cartouche de mélange selon une quelconque des revendications 1 à 8, dans laquelle la portion en goulot cylindrique comprend une seconde cavité comportant des ouvertures interne et externe, la seconde cavité étant placée en une position diamétralement opposée à la cavité ; dans laquelle l'organe à ressorts comprend un second élément rigide disposé dans la seconde cavité et qui dépasse à travers les ouvertures interne et externe de ladite seconde cavité ; et dans laquelle l'élément résilient est mécaniquement couplé au second élément rigide situé sur l'ouverture externe de ladite seconde cavité.

10. Cartouche cylindrique selon la revendication 9, dans laquelle la portion cylindrique de l'élément supérieur comprend une seconde butée placée en une position diamétralement opposée à la butée, la seconde butée interférant avec le second élément rigide de l'organe à ressorts.

11. Cartouche de mélange selon une quelconque des revendications 1 à 10, dans laquelle l'élément supérieur (4) comprend un pivot (F) autour duquel le levier d'activation pivotant (6) peut pivoter ; et dans laquelle la butée (11) de la portion cylindrique de l'élément supérieur est située à un angle d'environ 45 degrés ou d'environ 90 degrés par rapport au pivot (F) sur le plan de rotation de l'élément supérieur (4).
